# EUROPEAN PATENT APPLICATION

(11) **EP 1 283 610 A2**
(43) Date of publication of application: **12.02.2003**
(21) Application number: 02017772.1
(22) Date of filing: 09.08.2002
(51) Int. Cl.: H04H 7/00

(54) **Automated system and method for producing digital advertisements**

(30) Priority: 10.08.2001 JP 2001244284
(71) Applicant: Kabushiki Kaisha Toshiba, Tokyo 105-8001 (JP); Dentsu Inc., Chuo-ku, Tokyo 104-8426 (JP)
(72) Inventor: Ogawa, Yukio, 1-11-10, Tsukiji, Chuo-ku, Tokyo (JP); Ootawa, Motomu, 1-1 Shibaura 1-chome Minato-ku Tokyo 105 (JP); Yamashita, Takashi, 1-1 Shibaura 1-chome Minato-ku Tokyo 105 (JP); Nomura, Shigeo, 1-1 Shibaura 1-chome Minato-ku Tokyo 105 (JP); Okamura, Junichi, 1-1 Shibaura 1-chome Minato-ku Tokyo 105 (JP); Higashi, Keishi, 1-1 Shibaura 1-chome Minato-ku Tokyo 105 (JP); Nozawa, Yukiteru, 1-1 Shibaura 1-chome Minato-ku Tokyo 105 (JP)
(74) Representative: HOFFMANN - EITLE

(57) **Abstract**

A system 1 and method for producing and managing an advertisement is disclosed having an advertisement client head terminal 2 of an advertisement client who orders an object advertisement to be produced, an area base terminal 3 at each of area bases of the advertisement client, a production company terminal 4 of a production company which produces an advertisement part and advertisement design information, an advertisement production management server 5 which executes preliminary processing of separate examination for the advertisement part and the advertisement design information to produce a complete package to enable the advertisement to be altered upon receipt of an audience response, a broadcast entrepreneur 6 who executes separate examination of the advertisement and provides a broadcast of the advertisement, an audience terminal 7 from which the advertisement is viewed, and a response server 8 which collects the audience response.

## Description

### BACKGROUND OF THE INVENTION

### Field of the Invention

The present invention relates to an advertisement production management systems and method for performing production and management of an advertisement and, more particularly, to a system and method for permitting a complete package to be divided into an advertisement part and advertisement design information to manage production of an advertisement for thereby automatically producing a digital advertisement with diversified variations to enable production of the advertisement in an efficient fashion.

### Description of the Related art

In a conventional art, production of advertisement contents has been undertaken in a sequential work of planning and designing→production→transmission to broadcast station →examination→broadcasting.

When a production company has produced a complete package, forming a finally completed product of the advertisement, in a work that is labor intensive, this complete package is delivered to a broadcast station where the complete package is examined and, thereafter, the complete package is broadcasted. During such examination, an inspection is made as to whether the advertisement meets a broadcast standard, and operation is executed to confirm whether a screen is normally operative.

After the broadcasting operation, audience rates are collected to achieve a response analysis of an audience, thereby collecting and managing an exposure rate representing how many number of times the complete package is broadcasted.

### SUMMARY OF THE INVENTION

However, since in the conventional practice, a series of work has been undertaken with the complete package, an issue arises in which production of the advertisement is inefficient.

For instance, in an advertisement for the same product, when producing the advertisement in combination of two kinds of animations, two kinds of stationary pictures and thirty two kinds of sentences, complete packages in pieces of 2 x 2 x 32 = 128 are produced, with examinations being inevitably required for the 128 pieces of complete packages. Since, further, the number of clients who order the advertisement increases in a range from several hundreds to several thousands, as a matter of fact, it is impossible for the broadcast entrepreneur to execute the examinations of the complete packages transmitted from all the clients, complying with requests to address such an issue by taking a step to entrust the examination operations to outside parties.

Further, a data broadcast contains a larger volume of information than before to require complicated operations and, hence, there is a big demand for efficiently achieving production of the advertisement.

Also, in a conventional exposure management, since the exposure of the advertisement is managed by how many time the complete package is broadcasted, it is hard to manage how many number of times the animation, the stationary picture and the sentence forming the complete package are broadcasted.

Similarly, in the conventional practice, only a response analysis of the complete package can be undertaken in the analysis of the audience response, with a resultant inability of conducting the response analysis for the animation, the stationary picture and the sentence forming the complete package.

The present invention has been made with a view to addressing the above issues and has an object to provide a system and method for automatically producing and management an advertisement which provides a complete package formed with separate advertisement component and advertisement design information based on which production of the advertisement is managed for thereby producing an advertisement in an efficient and accurate manner.

To achieve the above object, according to a first aspect of the present invention, there is provided an advertisement production management server comprising an advertisement part which forms an object advertisement to be produced, a design information receiving section which receives advertisement design information to determine a layout of the advertisement component, a separate examination preliminary processing section which executes a preliminary processing of an examination for discriminating whether the advertisement part and the advertisement design information form an advertisement which is allowable to be broadcasted, an examination request section which transmits a processed result, obtained in the separate examination preliminary processing section, and the advertisement part and advertisement design information to a broadcast entrepreneur, who provides an audience with the advertisement, to request the examination thereof, and receives a result of the examination conducted by the broadcast entrepreneur, an advertisement production command information receiving section which transmits the advertisement part and the advertisement design information, of which the examination processing is conducted with the examination request section by the broadcast entrepreneur, to an advertisement client who has ordered the object advertisement to be produced, and receives an advertisement production command information, for producing a complete package forming a finally completed advertisement, from the advertisement client, a complete package producing section which produces the complete package of the production object advertisement on the basis of the advertisement production command information, and a complete package transmitting section which transmits the complete package to the broadcast entrepreneur.

According to the first aspect, the complete package is formed separate into a plurality of advertisement parts and a plurality of advertisement design information components based on which production of the advertisement is managed, resulting in a capability of producing the advertisement in an efficient and accurate manner.

Further, since the preliminary processing of the separate examination is executed for the advertisement parts and the advertisement design information components, the separate examination can be efficiently executed.

According to a second aspect of the present invention, there is provided an automatic advertisement production management system comprising a production terminal which provides separate advertisement components composed of a plurality of advertisement parts and a plurality of advertisement design information, an advertisement client terminal which provides advertisement production command information indicative of the advertisement part selected from the plural advertisement parts and the advertisement design information selected from the plural advertisement design information, and an advertisement production management server which stores the separate advertisement components to enable the advertisement client terminal to retrieve the selected advertisement part and the selected advertisement design information, the advertisement production management server including a separate examination processing section to execute a separate examination of the selected advertisement part and the selected advertisement design information to discriminate as to whether the separate advertisement components form an advertisement available to be broadcasted, and a complete package producing section responsive to the advertisement production command information and a separate examination processed result for producing a complete package to be evaluated as allowable to be broadcasted.

With the structure of the second aspect, the provision of the advertisement formed with the separate advertisement materials including a plurality of advertisement parts and a plurality of advertisement design information components which can be selected in response to the advertisement production command information enables the separate examination to be conducted to qualify the intended advertisement in a simplified and efficient manner while enabling the complete package of the advertisement to be automatically produced in an efficient manner.

According to a third aspect of the present invention, there is provided a method of performing production and management of an advertisement using a computer system, the method comprising compelling a server to receive an advertisement part, which forms an object advertisement to be produced, and advertisement design information, that determines a layout of the advertisement part, compelling the server to execute a preliminary processing of an examination for discriminating whether the advertisement part and the advertisement design information form the advertisement which is allowable to be broadcasted, compelling the server to transmit the advertisement part and the advertisement design information as well as a preliminarily processed result to a broadcast entrepreneur, who provides an audience with the advertisement, to request the examination thereof, and compelling the server to receive a result of the examination conducted by the broadcast entrepreneur, compelling the server to transmit the advertisement part and the advertisement design information, whose examinations are processed by the broadcast entrepreneur, to an advertisement client who has ordered the object advertisement to be produced, and allowing the server to receive an advertisement production command information, for producing a complete package that forms a finally completed advertisement, from the advertisement client, compelling the server to produce the complete package of the object advertisement to be produced on the basis of the advertisement production command information, and compelling the server to transmit the resulting complete package to the broadcast entrepreneur.

According to a fourth aspect of the present invention, there is provided a method of automatically producing and managing an advertisement, the method comprising providing separate advertisement materials including a plurality of advertisement parts and a plurality of advertisement design information, respectively, providing advertisement production command information indicative of selected one of the advertisement parts and selected one of the advertisement design information, storing the separate advertisement materials in an advertisement production management server, retrieving the selected one of the advertisement parts and selected one of the advertisement design information, processing separate examination of the selected one of the advertisement parts and the selected one of the advertisement design information as to whether these separate advertisement materials are qualified to form an advertisement allowable to be broadcasted, and producing a complete package of the advertisement, to be evaluated as allowable to be broadcasted, in response to the advertisement production command information and a result of the separate examination processed.

### BRIEF DESCRIPTION OF THE DRAWINGS

Fig. 1A is a block diagram illustrating a structure of an advertisement production management system according to an embodiment.
Fig. 1B is a view illustrating an example of a detailed structure of a separate examination preliminary processing section in the advertisement production management system according to the embodiment.
Fig. 1C is a view illustrating an example of a detailed structure of an advertisement database in the advertisement production management system according to the embodiment.
Fig. 1D is a view illustrating an evaluating section of the advertisement database in the advertisement production management system according to the embodiment.
Figs. 2A to 2E are views illustrating uniform code database structures shown in Fig. 1. Fig. 2A represents advertisement design information items. Fig. 2B represents image part codes registered in the advertisement design information. Fig. 2C represents codes of picture image parts for each platform. Fig. 2D represents each advertisement design code registered for each area base, and Fig. 2E represents a CM code added to a complete package.
Figs. 3A and 3B are views illustrating advertisement client database structures shown in Fig. 1 Fig. 3A represents information of advertisement frames of the advertisement client, and Fig. 3B represents information of the advertisements.
Fig. 4 is a view for illustrating a complete package, an advertisement component and advertisement design information.
Fig. 5 is a time chart for illustrating registering operation of the advertisement component and the advertisement design information to be used in the advertisement production management system shown in Fig. 1A.
Fig. 6A is a view illustrating an example of an advertisement part information registering screen to be used in registering operation, of advertisement parts, advertisement design information and meta information for respective parts, shown in Fig. 5.
Fig. 6B is a view illustrating an example of a structure of the meta information.
Fig. 7 is a time chart for illustrating preliminary processing of separate examination of the advertisement component in the advertisement production management system shown in Fig. 1A.
Fig. 8 is a flow chart for illustrating preliminary processing of separate examination of the advertisement design information in the advertisement production management system shown in Fig. 1A.
Fig. 9 is a time chart for illustrating advertisement production command operation in the advertisement production management system shown in Fig. 1A.
Fig. 10 is a view illustrating an example of a menu screen provided to the advertisement client in the advertisement production command operation sown in Fig. 9.
Fig. 11 is a view illustrating an example of a selection screen of the advertisement of an object to be produced in the advertisement production command operation sown in Fig. 9.
Fig. 12 is a view illustrating an example of a selection screen of the advertisement component in the advertisement production command operation sown in Fig. 9.
Fig. 13 is a time chart for illustrating the advertisement production command when designating the advertisement component for each area base in the advertisement production management system shown in Fig. 1A.
Fig. 14 is a view illustrating an example of a selection screen of the advertisement in the advertisement production command operation shown in Fig. 13.
Fig. 15 is a view illustrating an example of a selection screen of the advertisement component in the advertisement production command operation shown in Fig. 13.
Fig. 16 is a view illustrating an example of a selection screen of the advertisement component in the advertisement production command operation shown in Fig. 13.
Fig. 17 is a time chart for illustrating a production and providing operation of the complete package in the advertisement production management system shown in Fig. 1A.

### DETAILED DESCRIPTION OF THE PREFERRED EMBODIMENT

An advertisement production management system according to an embodiment is described hereinafter with reference to the drawings.

### 1. System Overview

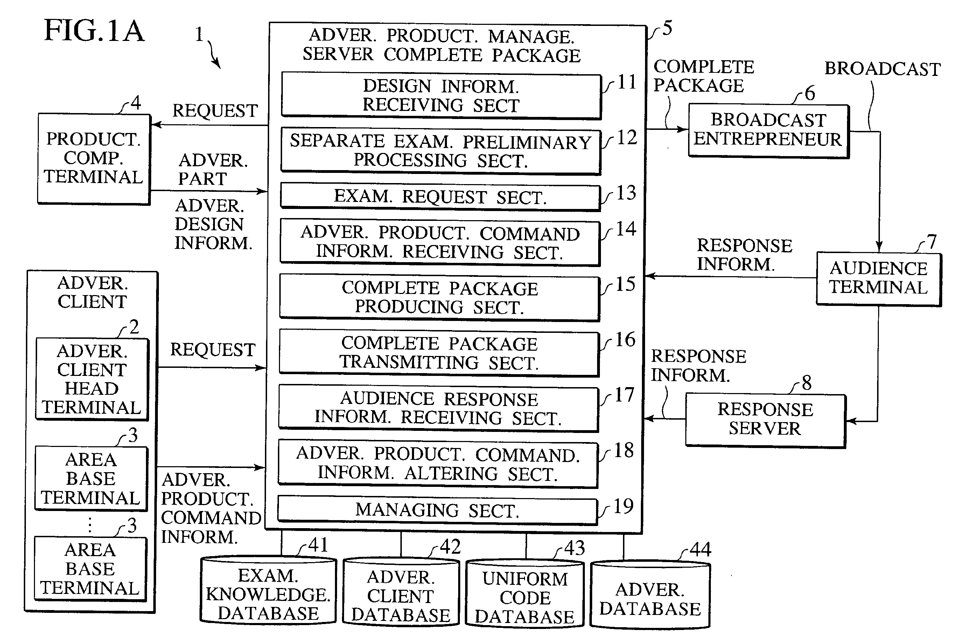

As shown in Figs. 1A to 1D, the advertisement production management system 1 includes an advertisement client head terminal 2 located at a head office of an advertisement client who orders an advertisement to be produced, area base terminals 3 located at various area bases of the advertisement client, a production company terminal 4 located in a production company to provide separate advertisement materials composed of a plurality of advertisement parts and a plurality of advertisement design information components to allow selected one of the advertisement parts and selected one of the advertisement design information components, an advertisement production management server 5 which produces the advertisement while executing a preliminary examination of the separate advertisement materials and allowing an audience response to be reflected when producing the advertisement to permit a quality of the advertisement to be managed, a broadcast entrepreneur 6 who provides an audience with the advertisement together with a program and information, and a response server 8 which collects the audience response.

Also, the respective terminals of the advertisement production management system 1 are connected to one another by means of communication networks, such as public networks or Internet, or a broadcasting network.

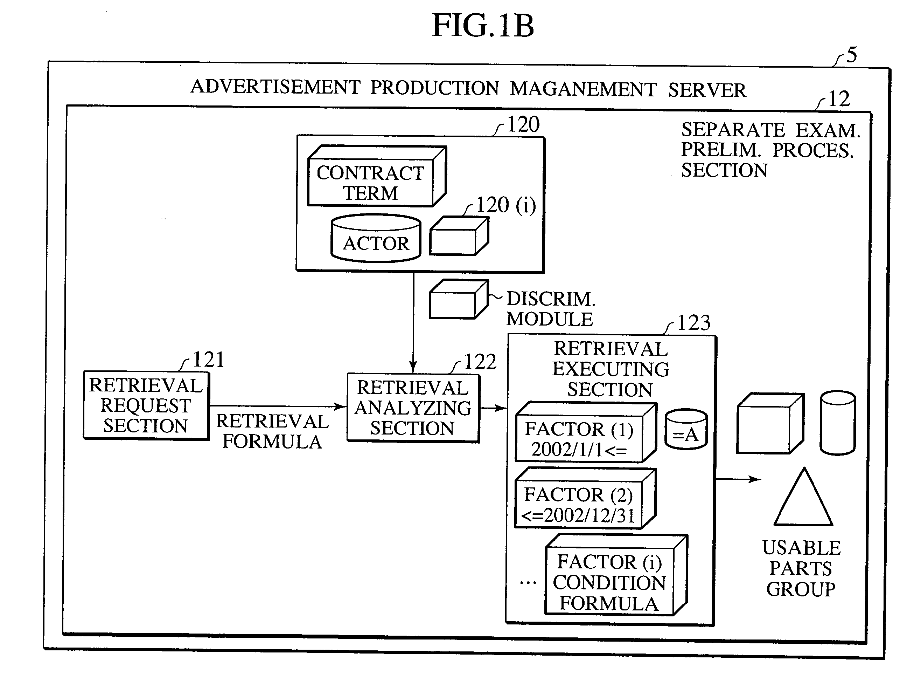

The advertisement production management server 5 includes a design information receiving section 11 which receives the separate advertisement materials composed of the advertisement parts, which form the advertisement, and the advertisement design information which determines a layout of the selected advertisement parts, a separate examination preliminary processing section 12 which preliminarily executes the separate examination of the separate advertisement materials to discriminate the advertisement parts and the advertisement design information as to whether a complete package of the advertisement produced with the selected advertisement design information components and the selected advertisement parts conforms to a broadcast standard, an examination request section 13 which transmits the selected advertisement parts and selected advertisement design information together with a preliminary examination result, obtained from the separate examination preliminary processing section 12, to the broadcast entrepreneur 6 and requests the examination of the separate advertisement materials and which receives a result of the examined conducted with the broadcast entrepreneur 6, an advertisement production command information receiving section 14 which receives the advertisement production command information from the advertisement client for producing a complete package of a finally complete advertisement, a complete package producing section 15 which produces the complete package of the object advertisement in response to the advertisement production command information, a complete package transmitting section 16 which transmits the complete package to the broadcast entrepreneur 6, an audience response information receiving section 17 which receives response information of an audience who viewed and listened to the complete package, an advertisement production command information altering section 18 which allows the advertisement production command information of the advertisement to be altered on the basis of the response information, and a management section 19 which upon altering data related to an exposed result of the complete package from the broadcast entrepreneur 6, manages the complete package for each advertisement part and advertisement design information. As shown in Fig. 1B, the separate examination preliminary processing section 12 further includes a retrieval request section 121 obtaining a retrieval formula of meta information, which will be described later, a retrieval analyzing section 122 which extracts a "tag" and a "tag value", which will be described below, from the retrieval formula received from the retrieval request section 121 and retrieves a discrimination module, corresponding to the "tag", from a tag database 120 (to be described later), and a retrieval executing section 123 which retrieves the advertisement database 44 using the discrimination module obtained in the step previously mentioned.

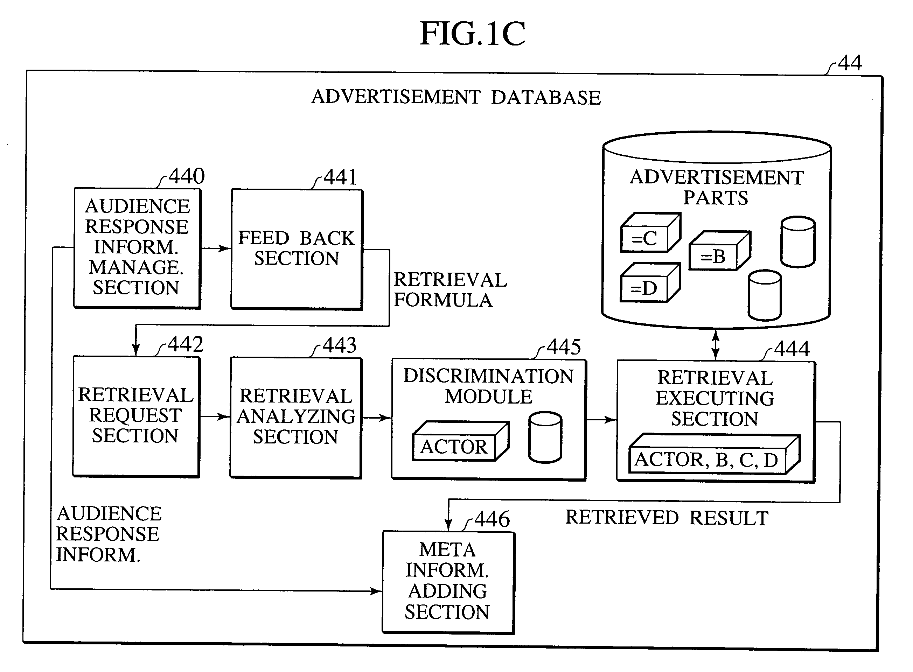

Further, as shown in Fig. 1C, information received with the above described audience response information receiving section 17 is managed with an audience response information managing section 440 and a feed back section 441 contained in the advertisement database 44. Also, information obtained via the audience response information receiving section 17 is added as the meta information with a meta information adding section 446 with a view to reusing the parts.

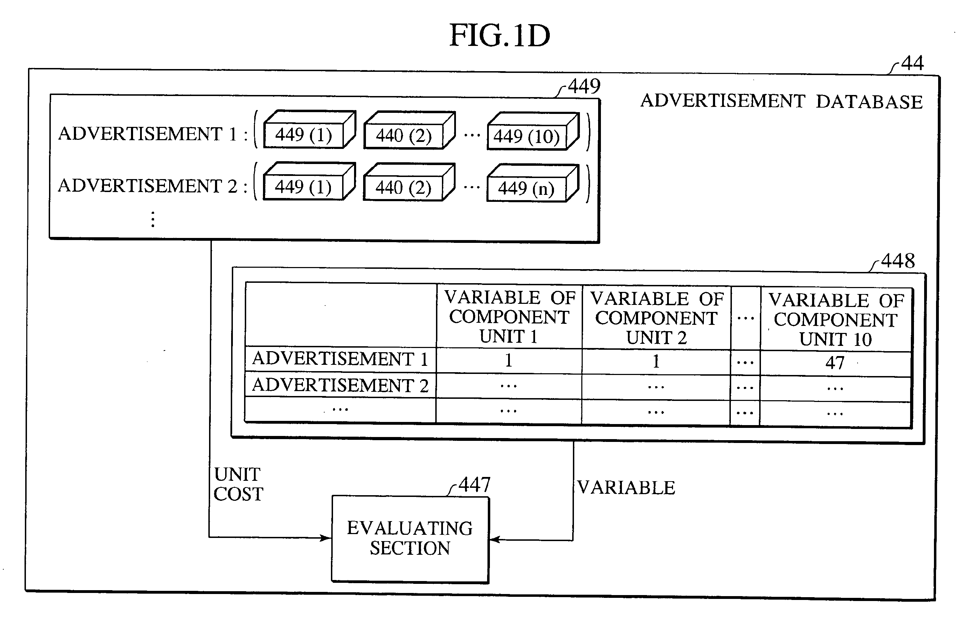

Furthermore, as shown in Fig. 1D, the advertisement database 44 also includes an evaluating section 447 which is described below.

The advertisement production management server 5 is, for instance, managed and operated with an advertisement agent, and connected to a host computer, which is not shown, via the Internet.

The advertisement production management server 5 is connected to an examination knowledge database 41 in which examination standard information for executing the preliminary processing of the separate examination is stored, an advertisement client database 42 in which information related to the advertisement client who orders the advertisement is stored, a uniform code database 43 in which codes added to the advertisement parts and advertisement design information are stored, and an advertisement database 44 in which the advertisement parts, the advertisement design information and the complete package or the like are stored.

The examination knowledge database 41 set forth above stores the examination standard information which defines a standard required for conducting the examination of the advertisement parts and the advertisement design information on the basis of a Cosmetic and Medical Instruments Act, a Premium Trading Act, an extravagant advertisement expression capability, past CM materials, a size standard, a degeneration standard, an allowable data capacity and a resolution standard or the like. The examination standard information is stored for each of the broadcast entrepreneurs and each of platforms.

The advertisement client database 42 stores basic information related to a person who is in charge, a post in charge and each area base, and altered conditions of the advertisement production command information for each advertisement client. Further, the advertisement client database 42 stores area codes of respective area bases.

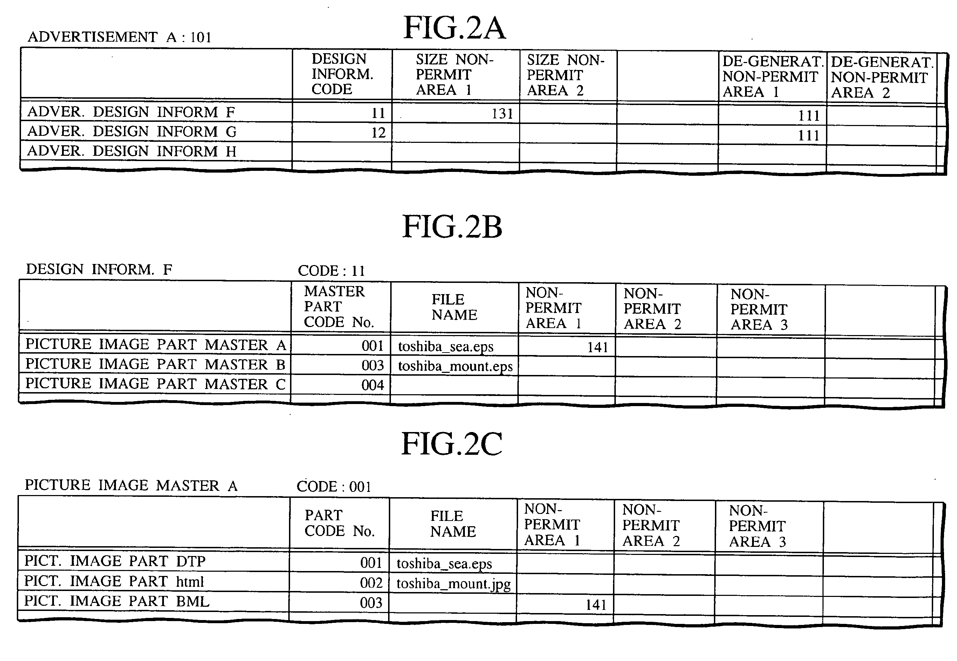

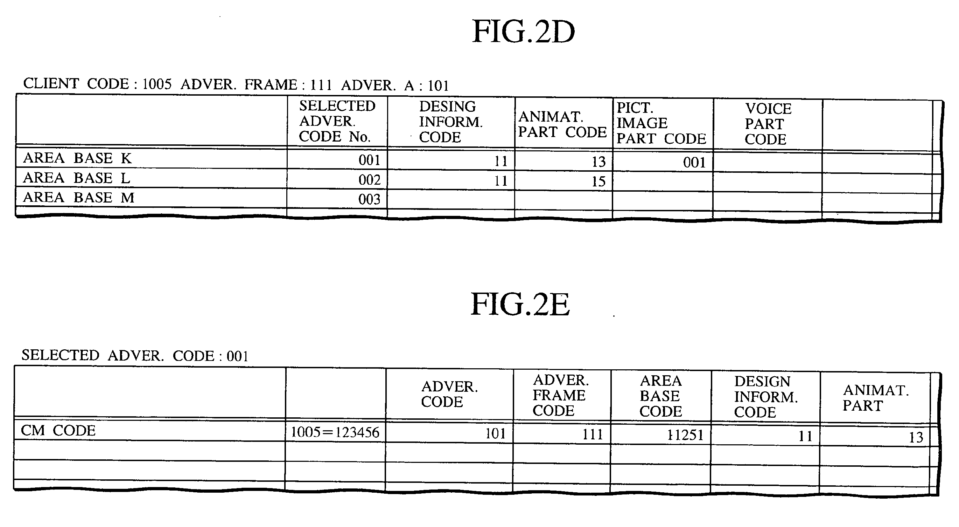

The uniform code database 43 stores respective codes added to the respective advertisement parts, the advertisement design information components and the complete packages. Describing a structure of the uniform code database 43 with reference to Figs. 2A to 2E, Fig. 2A illustrates codes related to advertisement design information items registered in an advertisement A, Fig. 2B illustrates codes related to respective picture image parts registered in advertisement design information F, and Fig. 2C illustrates respective codes of the picture image parts for each platform registered in a picture image part master A. Also, Fig. 2D illustrates respective codes of the advertisement design information, the animation parts, the picture image parts and the voice parts which the respective area bases K, L and M store for the advertisement A of the advertisement client code 1005, and Fig. 2E illustrates a CM code added to the complete package.

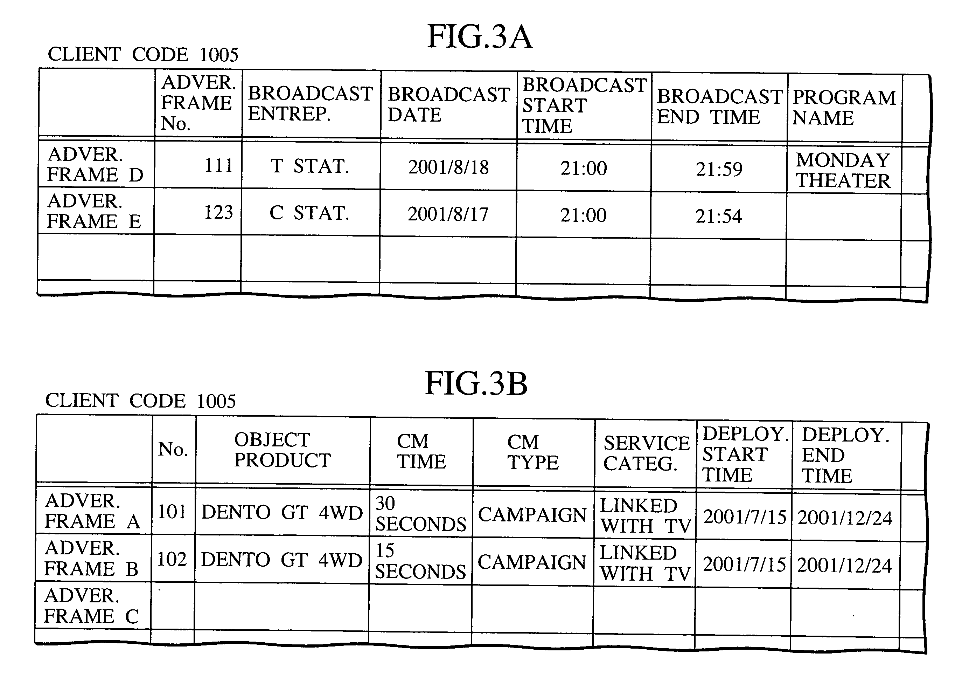

The advertisement database 44 stores information related to the advertisement for each advertisement client as shown in Figs. 3A and 3B. The advertisement database 44 stores files, such as advertisement production command information with associated advertisement components and advertisement design information and the complete packages or the like. Especially, the advertisement component is stored for each kind of files and each platform. For instance, the advertisement components are stored in a text component master file, a voice part master file, a picture image part master file, an animation part master file and an XML part master file, respectively, for each kind of files. Also, the advertisement parts are stored in a wide use part DTP file, a wide use part html file and a wide use part MBL file, respectively, for each platform. Fig. 3A represents information related to advertisement frames and illustrates information of the advertisement frames D, E of the client code 1005. Likewise, Fig. 3B represents information related to advertisements and illustrates information of the advertisements A, B, C of the client code 1005.

The broadcast entrepreneur 6 includes broadcast stations such as those of surface wave and BS digital broadcastings and a CS broadcasting or the like, an Internet broadcasting station which provides advertisements on Webs, and communication entrepreneurs who provide services for portable telephones.

The audience terminal 7 includes digital televisions and, in addition thereto, terminals such as personal computers, portable telephones and PDAs.

### 2. Operational Overview

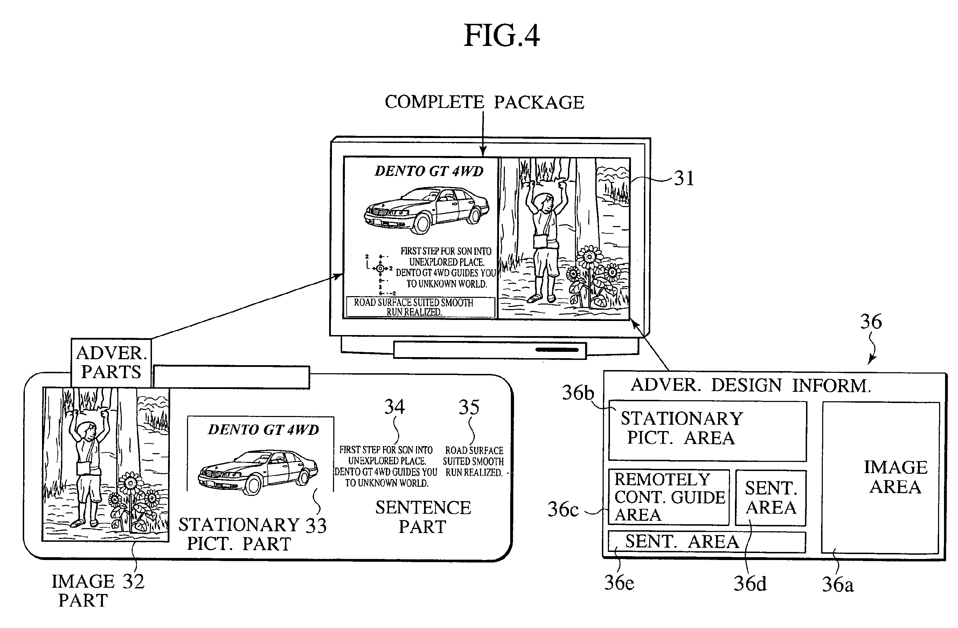

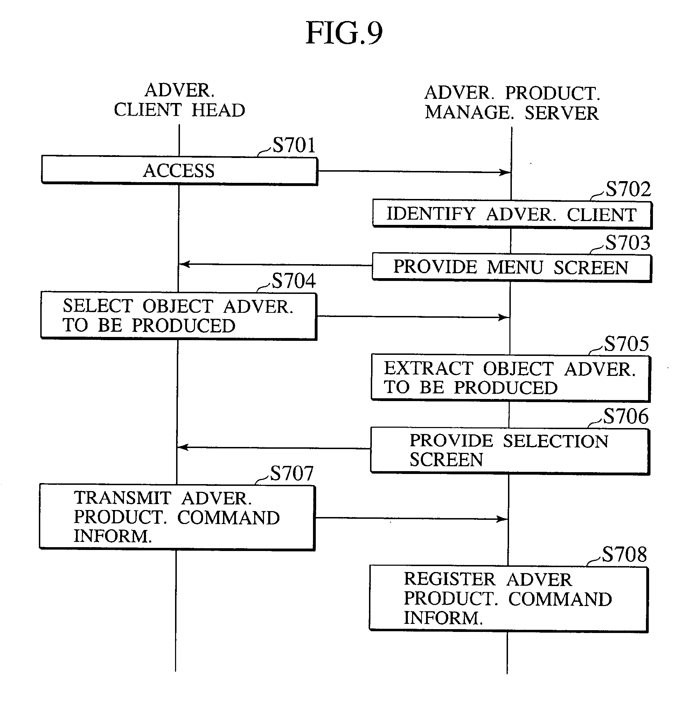

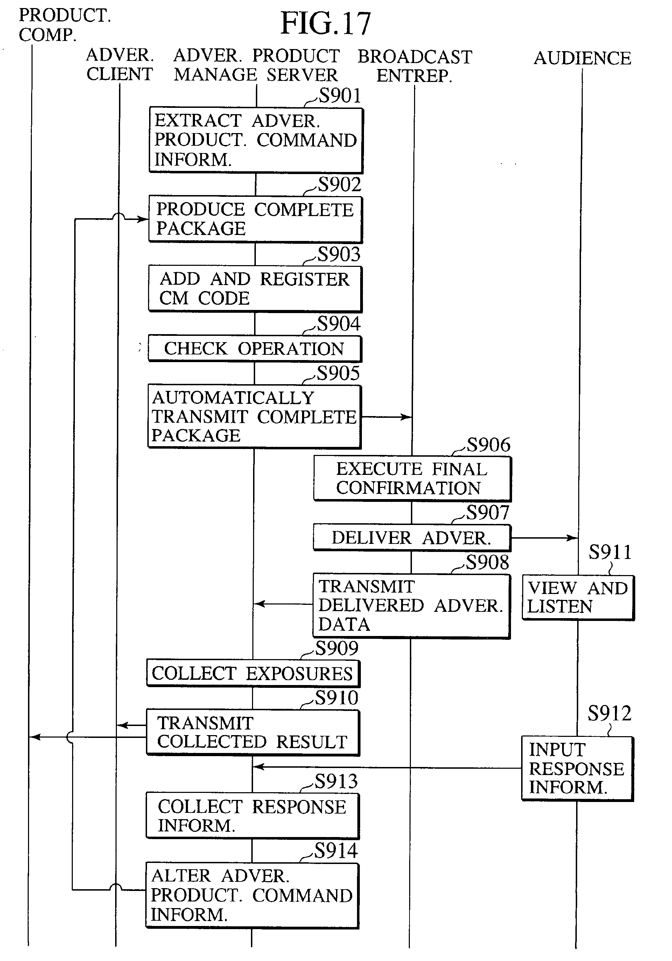

Now, operations to be executed using the advertisement production management system 1 according to the embodiment is described below in the following sequence of:
2-1. Registering Operation (Figs. 4 to 8) for Advertisement Parts and Advertisement Design Information
2-2. Advertisement Production Command Operation (Figs. 9 to 16), and
2-3. Producing and Providing Operations (Fig. 17) for Complete Package
2-1.Registering Operation for Advertisement Parts and Advertisement Design Information

Initially, the advertisement client requests a particular advertisement to the advertisement production management server 5 whereupon the advertisement production management server 5 requests the production of the particular advertisement to the production company 4.

Then, the production company 4 produces separate advertisement materials composed of selected advertisement pans, which form the particular advertisement requested by the advertisement client, and selected advertisement design information components for determining a layout of the selected advertisement parts. Examples of the advertisement parts and the advertisement design information components are shown in Fig. 4. As shown in Fig. 4, when producing a complete package of a particular advertisement 31, the advertisement parts 31 and advertisement design information 36 are required. For instance, the advertisement parts 31a include an image part 32, a stationary picture part 33, and sentence parts 34, 35.

The advertisement design information 36 has the layout formed in areas allocated with respective advertisement components such as an image area 36a adapted to be filled with the image part 32, a stationary picture area 36b adapted to be filled with the stationary picture part 33, a remotely controlled guide area 36c, a first sentence area 36d adapted to be filled with the sentence part 34 and a second sentence area 36e adapted to be filled with the sentence part 35.

On the basis of such advertisement design information, the complete package 31 is produced as a finally complete advertisement product in which respective areas are allocated with the selected relevant advertisement parts.

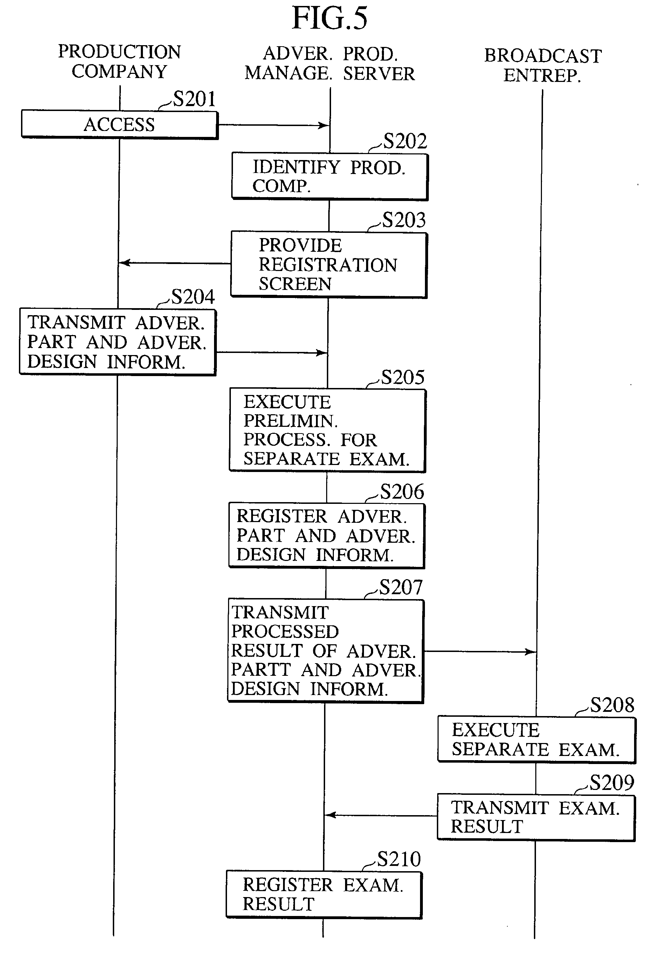

As the advertisement materials composed of the selected advertisement parts and the selected advertisement design information such as those shown in Fig. 4 are prepared, the registering operation for the selected advertisement parts and selected advertisement design information is initiated in a manner as shown in a time chart of Fig. 5, and the production company 4 accesses to the advertisement production management server 5 (step S201).

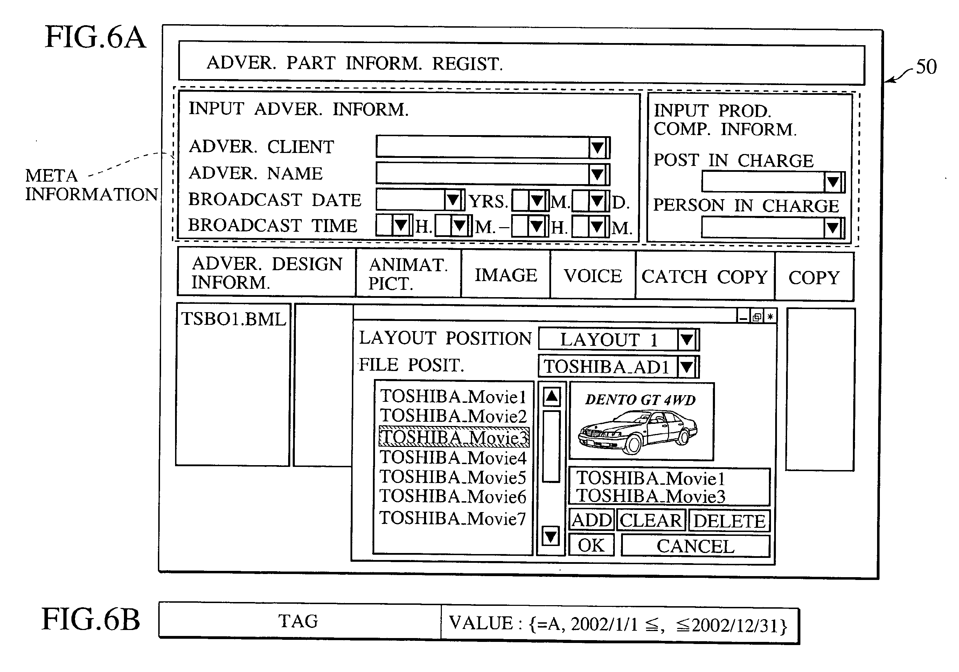

After the advertisement production management server 5 has identified the production company 4 (step S202), the advertisement production management server 5 provides to the production company 4 with a registration screen 50 containing the advertisement parts and the advertisement design information as shown in Fig. 6A(step S203).

As shown in Fig. 6A, when preparing respective parts, the production company 4 inputs supplementary information, called as "meta information", from a registration screen 50. In Fig. 6A, an example of the "meta information" is shown as contained in the registration screen 50 to allow the production company 4 to input information related to the advertisement, such as the advertisement client for a particular advertisement to be ordered, the name of the advertisement, the broadcasting date and the broadcasting time, and information related to the production company, such as a post in charge and a person in charge of the production company.

Further, another meta information may involve information, such as a contract term, a contract medium and a character limited to a particular broadcasting station, and may be inputted from the registration screen 50. An example of the contract term may involve supplementary information such as a broadcasting range that is preliminarily determined, for instance, information indicative of a term from January 1st, 2002 to December 31 of the same year, with supplementary information being added to each advertisement part. Thus, the presence of the supplementary information, related to a usable period for each part, allows a check of an effective period, when reusing such a part to another advertisement, to be easily conducted. Further, an application example of the contract medium may have supplementary information such as a flag, indicative of a capability of being broadcasted on a ground wave or a satellite wave, and a non-permit broadcasting flag indicative of an inability of being broadcasted on a broad band basis. That is, it is possible for the advertisement production company 4 to add meta information, indicative of a condition of which medium can use each part, based on the condition of the broadcasting medium by which broadcast is desired by the advertisement client. With such an arrangement, it is possible to easily check the broadcasting medium when reusing this part to the other advertisement. Also, in a case where a certain part can be used, for instance, only with a particular broadcast entrepreneur, this advertisement part may be added with meta information representing that such a part can not be reused in another advertisement directed for the other broadcast entrepreneur. Furthermore, a method of utilizing meta information may include "establishment of a threshhold value and preparation of a warning list". For instance, the establishment of the threshhold value is achieved with meta information expressed as "Overdue on August 10th, 2002". The number of remaining unusable days of each part before the unusable last day (for instance, August 10th) is counted on the basis of such threshold value, and it may be possible for a group of object parts to be displayed over the screen shown in Fig. 6A as the warning list at the month before the threshold value. Here, supplementary information may be inputted which includes information as to whether or not the producer renews the contract for each part displayed on the warning list. Further, in case of absence of renewal of the contract, another part is prepared based on a new contract with an opportunity for preparing the warning list. The part whose contract is terminated becomes non-permit as soon as the given threshold is established, and in place thereof, the new part, which has been previously prepared is registered in a group of parts which are newly usable. Thus, with such meta information, it is possible to widely manage and make use of the part. Of course, the content of and the method of using meta information are not limited to the above applications.

Fig. 6B shows an example of a structure of meta information. The meta information, as shown in this figure, is comprised of a "Tag", indicative of a kind of the meta information, and a "Value" indicative of the content of the meta information. The meta information is initially attached to each part according to an instruction or the like of the advertisement client by a part producer. However, once the meta information has been registered, the registration of the meta information is automatically processed in a subsequent operation in the advertisement production management server 5, i.e., when executing the preliminary processing with the separate examination preliminary processing section 12, which will be described later, and when feeding back the response information from the audience which is subsequently described. The producer may produce another advertisement based on an automatically processed result.

Further, when using the previously produced advertisement parts for producing another advertisement, i.e., even when producing the advertisement reusing the advertisement parts which are preliminarily added with meta information, it is possible for the producer to retrieve desired advertisement parts on the basis of meta information.

In the following description, let it be assumed that meta information has a registered advertisement contract term of "2002/1/1∼2002/12/31". Further, let it be assumed that an actor A is used as one advertisement part in such an advertisement.

Here, let's consider for a case in which the producer reuses the advertisement containing the structure of the advertisement parts with the conditions as set forth above. The producer inputs a retrieving condition, including a desired part name (for instance: Actor A), to the retrieving request section of the separate examination preliminary processing section 12 (see Fig. 1B). During such operation, desired conditions may be inputted on the input screen 50 as shown in Fig. 6A. The retrieval request section 121 prepares a retrieval formula expressed as "Actor = A & 2002/1/1<= Contract Term<= 2002/12/31" on the basis of the two conditions. The retrieval analyzing section 122 extracts the "Tag" and "Value" from the retrieval formula prepared in the retrieval request section 121. In this example, two tags of "Actor" and "Contract Term" and three values of "=A", "2002/1/1< =" and "<= 2002/12/31" are obtained. In the retrieval analyzing section 122, further, a discrimination module corresponding to the above tags is retrieved from the tag database 120 which is preliminarily contained. Subsequently, the retrieval executing section 123 gives a factor of "= A" to the retrieved discrimination module relevant to the "Actor" and factors of "2002/1/1<=" and "<= 2002/12/31" to the discrimination module relevant to the "Contract Term".

Each discrimination module retrieves the advertisement part with the tag of "Actor" and the value of ""= A". On the other hand, also, the advertisement part is retrieved which includes the tag of "Contract Term" with the values of "2002/1/1 <=" and "<= 2002/12/31". The retrieval executing section 123 retrieves only the parts that satisfy both the inputted conditions previously mentioned among retrieved results returned from the respective discrimination modules. The producer is enabled to obtain the parts finally retrieved with the retrieval executing section 123 and may be suffice to produce the advertisement using this part.

And, upon termination of registration and selection of the advertisement part executed in the sequence set forth above, subsequently, the advertisement design information is initially designated and, thereafter, the advertisement parts such as the image, the stationary picture and the voice are registered in a sequence via the registration screen 50. During such operation, a pop-up window such as that shown in Fig. 6A is provided for a display of a file from which the advertisement parts are selected and designated. Fig. 6A exemplarily shows a case, of registering the image part, in which designating the file from the pop-up window enables the image to be confirmed and the image part to be registered while confirming this image. During such operation, the production company 4 produces a large number of advertisement parts and a large number of design information components to be registered in conjunction with one particularly requested advertisement such that, in a subsequent stage, the advertisement client is able to select desired advertisement parts from a variety of selectable objects.

Thus, upon inputting the advertisement parts and advertisement design information via the registration screen 50, the production company 4 transmits resulting data to the advertisement production management server 5 (step S204).

Upon receipt of transmitted resulting data, the advertisement production management server 5 executes a preliminary processing (step S205) for the separate examination to be conducted by the broadcast entrepreneur 6. During execution of preliminary processing, the separate examination is conducted for each advertisement part and each advertisement information.

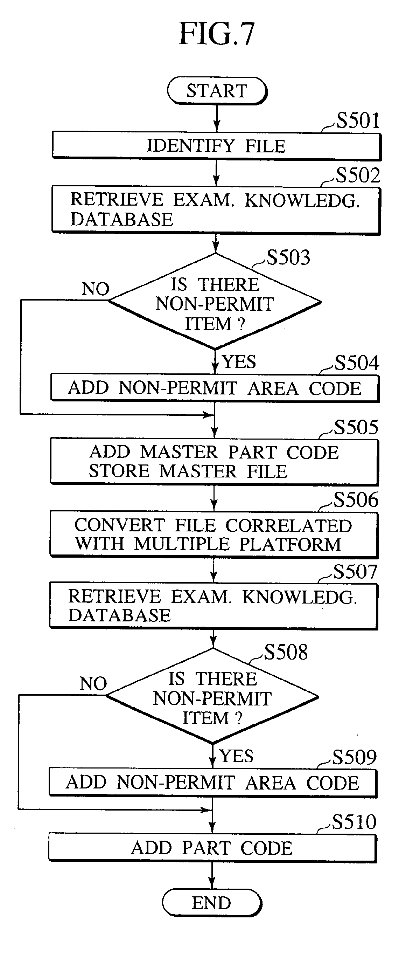

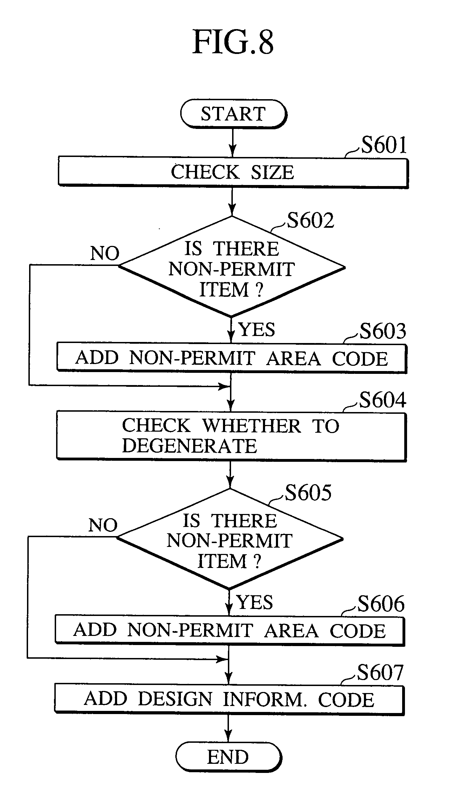

Preliminary processing of the separate examination for the advertisement parts to be implemented in step S205 is described hereinafter with reference to a flow chart of Fig. 7, and preliminary processing of the separate examination for advertisement design information is described below with reference to a flow chart of Fig. 8.

As shown in Fig. 7, when executing the preliminary processing for the separate examination of the advertisement parts, initially, the files of the advertisement parts are identified (step S501). The files to be identified are categorized into, for instance, a text file, a voice file, an image file, a stationary picture file and an XML file or the like.

Then, operation is made to retrieve information from the examination knowledge database 41 according to a particular kind of the identified file (step S502), and discrimination is made as to whether there is the broadcast entrepreneur who should not use the advertisement parts which are present in the examination (step S503). If it is discriminated that there exist the broadcast entrepreneur who can not use the advertisement part, the advertisement part is added with a non-permit area code (step S504).

Then, the advertisement part is added with a master part code and is stored in a master file of the advertisement database 44 (step S505), When this takes place, the advertisement part is stored in the text part master file, the voice part master file, the image part master file, the animation part master file and the XML part master file, respectively.

The added non-permit area code and master part code are stored in the uniform code database 43. For instance, the master part code of "0001" is registered for the image part master A, for which the non-permit area code "141" is also registered.

Next, conversion of the file is executed for the advertisement part in compliance with the multiple platform (step S506). The kind of platforms to be converted here includes DTP, html, BML or the like.

By retrieving information from the examination knowledge database 41 for each platform (step S507), discrimination is made as to whether there exists the broadcast entrepreneur who can not use the advertisement part (step S508). If the broadcast entrepreneur who can not use the advertisement part is found, then the advertisement part is added with the non-permit area code (step S509).

The part code is added for each platform (step S510), thereby terminating the preliminary processing of the separate examination for the advertisement part.

The non-permit area code and the part code thus added are stored in the uniform code database 43. For instance, the part code of "003" is registered for the image part BML, shown in Fig. 2C, for which the non-permit area code of "141" is also registered.

Further, the separate examination preliminary processing in case of using meta information is described with reference to Fig. 1B, The following description is made for illustrating step S502 of Fig. 7, previously mentioned, more in detail. Referring to Fig. 1B, the separate examination preliminary processing section 12 includes the retrieval request section 121 which begins to retrieve the relevant part according to the retrieval formula preliminarily inputted or registered, the retrieval analyzing section 122 which receives the retrieval formula from the retrieval request section 121, extracts tag information and value of the content of the retrieval formula and reads in the discrimination modules necessary for the retrieval from the tag database 120 which is separately located, and the retrieval executing section 123 which gives the desired factors to the discrimination modules and executes retrieving in the advertisement database 44.

The retrieval formula involves the condition as to whether or not the broadcast entrepreneur will be who can not use the advertisement part, or the condition as to whether or not the part to be used in the broadcast remains in a contract range of the broadcast term. Here, step S502 is described below in detail in conjunction with an example with the latter condition.

For instance, let it be assumed that the broadcast term of an object advertisement for which the preliminary examination is to be executed is determined to be "2002/1/1∼2002/12/31". In such a case, the retrieval request section 121 prepares the formula expressed as "2002<=Contract Term<= 2002/12/31", with the retrieval formula being given to the retrieval analyzing section 122. The retrieval analyzing section 122 extracts the tag of "Contract Term" and the two values of "2002/1/1" and "2002/12/31" from the received retrieval formula. Subsequently, the retrieval analyzing section 122 executes the retrieving in the tag database 120 which is preliminarily prepared, and retrieves the discrimination module 120 (i) (1<= i<= n) related to the tag "Contract Term" which is previously extracted. The retrieval executing section 123 gives the factors of "2002/1/1" and "2002/12/31" to the discrimination module 120 (i), executes the retrieving in the advertisement database 44 and discriminates whether the value of the "Contract Term" of the part to be used corresponds to "2002/1/1" and "2002/12/31". The retrieval executing section 123 discriminates whether or not the resulting part is allowable to be used in the broadcast. Thereafter, the operations set forth above are repeatedly executed,

Now, the preliminary processing of the separate examination for the advertisement design information is described below with reference to a flow chart of Fig. 8.

During primary processing of the separate examination for the advertisement design information, the advertisement production management server 5 initially conducts a size check of the advertisement design information (in step S601).

Then, operation is executed to retrieve information from the examination knowledge database 41, thereby checking whether the size of the advertisement design information meets the size standard for each broadcast entrepreneur to thereby discriminate whether there exists the broadcast entrepreneur who can not use the advertise design information (step S602).

If there exists the broadcast entrepreneur who can not use the advertisement design information, the advertisement design information is added with a non-permit area code (S603).

Subsequently, the advertisement production management server 5 conducts degeneration check of advertisement design information (S604).

Upon referring to the examination knowledge database 41, checking is made as to whether degeneration processing of advertisement design information meets a degeneration standard for thereby executing discrimination as to whether there exists the broadcast entrepreneur who can not use the advertisement design information (S605).

If there exists the broadcast entrepreneur who can not use the advertisement design information, then, the advertisement design information is added with the non-permit area code (S606), and added with a design information code (S607) for thereby terminating the preliminary processing of the separate examination of the advertisement design information.

The non-permit area code and the design information code thus added are stored in the uniform code database 43. For instance, the design information code of "11" is registered for the advertisement design information F, as shown in Fig. 2A, for which a size non-permit area code of "131" and a degenerating non-permit area code of "111" are also registered.

Thus, when terminating the preliminary processing of the separate examination in step S205 in the flow chart shown in Fig. 5, the advertisement production management server 5 registers the advertisement part and the advertisement design information in the advertisement database 44 (S206). When this takes place, the advertisement part is registered for each platform such as the DTP file, the html file and the BML file.

The advertisement production management server 5 transmits the advertisement parts and advertisement design information together with the results of the preliminary processing to the broadcast entrepreneur 6 (S207), which in turn executes the separate examination (S208) for the respective advertisement parts and advertisement design information components referring to the results of the preliminary processing, with examination result being transmitted to the advertisement production management server 5 (S209)

Here, while the step S207 has been described with reference to a case where information is transmitted only to the broadcast entrepreneur 6, it may be altered such that the advertisement parts, the advertisement design information components and the results of the preliminary processing are also similarly transmitted to the client for the check of the examined conditions to permit checked results to be transmitted again to the advertisement production management server 5.

Upon receipt of the separate examination results from the broadcast entrepreneur 6, the advertisement production management server 5 registers the examination results in the examination knowledge database 41 (S210), thereby permitting the advertisement production management system 1 to terminate the registering operation of the advertisement parts and advertisement design information.

Thus, during registering operation of the advertisement parts and advertisement design information, the preliminary processing of the separate examination is conducted for the advertisement parts and advertisement design information but not for the complete package as conducted in the conventional practice, it is possible for the preliminary processing of the examination to be efficiently carried out.

For instance, since in the conventional practice, the examination was carried out for the complete package, in a case where the advertisement is comprised of two kinds of image parts, two kinds of voice pans and thirty two kinds of sentence parts in combination, the examination should be carried out for the complete packages in pieces of 2 x 2 x 32 = 128. On the contrary, since the separate examination allows the examination to be carried out for each advertisement part, the examination can be conducted for all the advertisement parts in pieces of 2 + 2 + 32 = 36, with a resultant remarkable increase in an efficiency of preliminary processing of the separate examination.

Similarly, when conducting the examination by the broadcast entrepreneur 6, since the advertisement production management server 5 provides the advertisement under the condition in which the advertisement parts and advertisement design information are separate from one another, the broadcast entrepreneur 6 is able to perform the separate examination, enabling the examination processing to be carried out in a remarkably high efficiency. Further, since the advertisement production management server 5 provides the broadcast entrepreneur 6 with the results of preliminary examinations of the separate examinations, the broadcast entrepreneur 6 is able to execute the examination processing at a higher efficiency with reference to the results of the preliminary processing.

Further, since the advertisement production management server 5 receives the examination results from the broadcast entrepreneur 6 and registers these results in the examination knowledge database 41, the examination standard information of the examination knowledge database 41 increases in volume, providing a capability of maintaining a quality of the preliminary processing of the separate examinations at a high level.

### 2-2. Advertisement Production Command Processing

The Advertisement Production Command Processing is described below with reference to Fig. 9.

As shown in Fig. 9, initially, the advertisement client head terminal 2 accesses the advertisement production management server 5 (S701). Although the following description is made in conjunction with a case wherein the advertisement production command is exemplarily conducted with the advertisement head server 2, it may be altered such that the advertisement production command is made with the advertisement agent requested by the advertisement client.

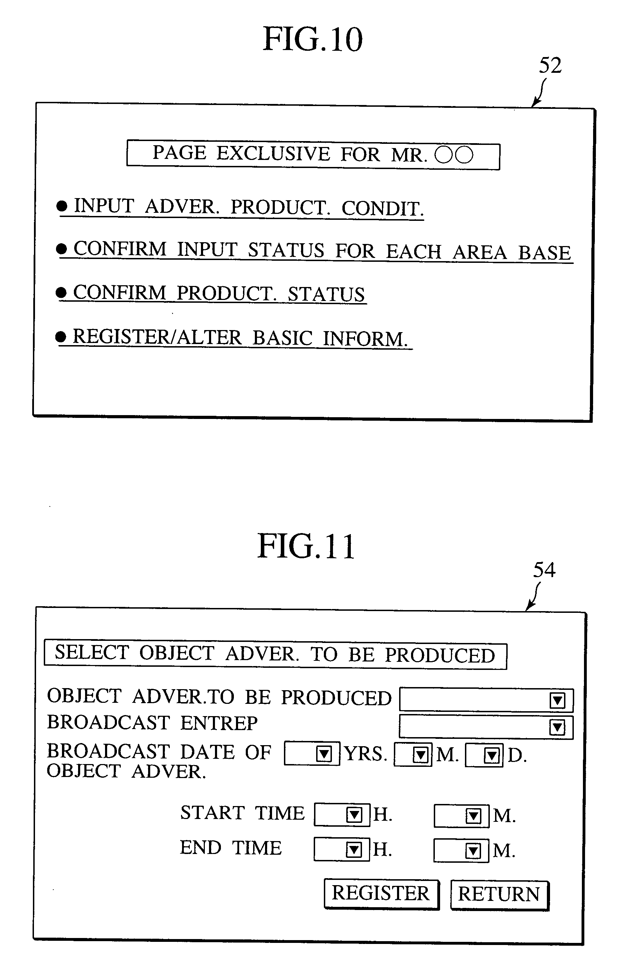

In response to such access, the advertisement production management server 5 retrieves information from the advertisement database 42 and identifies the client (S702), providing a menu screen (S703) for each advertisement client as shown in Fig. 10 (S703).

As shown in Fig. 10, the menu screen 52 is provided with a display of "Input Advertisement Production Condition", "Confirm Input Status for Each Area", "Confirm Production Status" and "Register or Alter Basic Information" and, if an item "Confirm Input Status for Each Area", an operator is able to confirm an input status (for checking an input or non-input status) of the advertisement for each local area, and selected advertisement design information and advertisement part. Further, if an item "Confirm Production Status" is selected, the operator is able to confirm a production stage (such as a finish of separate examination preliminary processing or a finish of transmitting the complete package) for the object advertisement to be produced.

If an item "Register or Alter Basic Information", the operator is able to register or alter client's basic information (the post in charge, the person in charge, area information, etc.).

If an item "Input Advertisement Production Condition", a selection screen 54 for the object advertisement to be produced appears as shown in Fig. 11. From the selection screen 54, the operator selects the object advertisement to be produced by inputting information such as the object advertisement to be produced, the broadcast entrepreneur, a broadcasting start time, and an end time (S704).

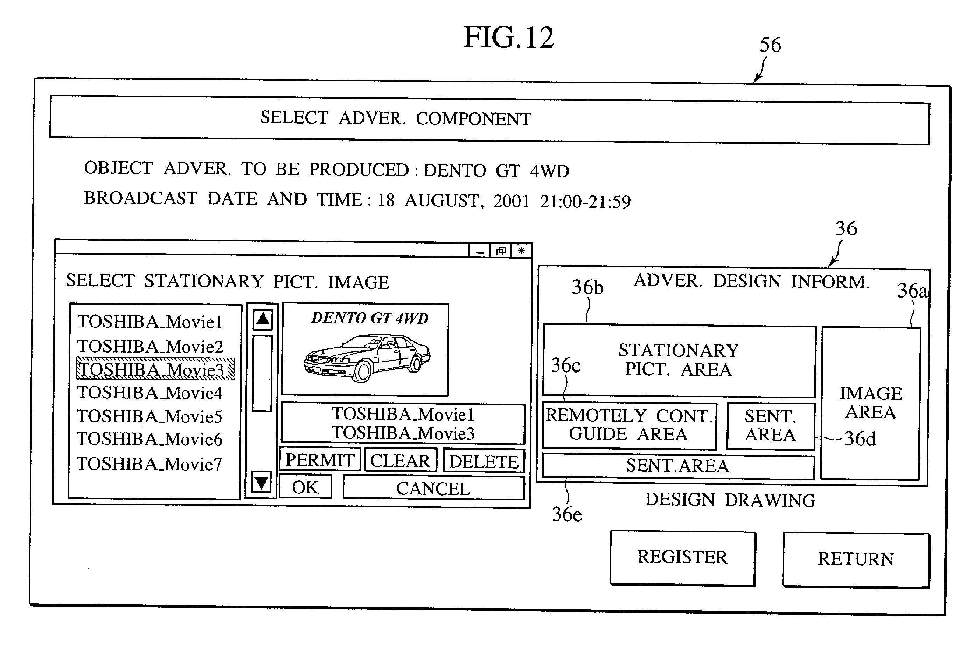

In response to such operation, the advertisement production management server 5 extracts information, such as the advertisement part, advertisement design information, advertisement frame information and the available advertisement, of the object advertisement to be produced from the advertisement database 44 (S705), providing the advertisement head server 2 with a display of a selection screen 56 with the advertisement part as shown in Fig. 12 (S706).

The advertisement client head server 2 selects advertisement design information components and the respective advertisement pans from the selection screen 56 shown in Fig. 12 for determination therreof, with determined data being transmitted to the advertisement production management server 5 as advertisement production command information (S707).

The advertisement production management server 5 register received advertisement production management command information in the advertisement database 44 (S708) and terminates the advertisement production command processing.

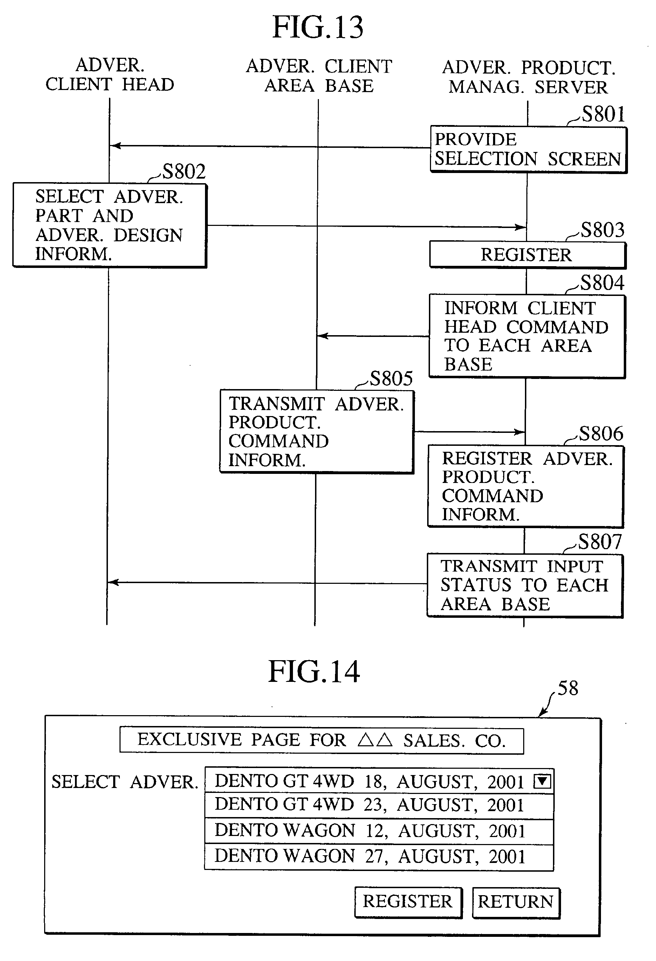

Now, the advertisement production command processing to be performed in a case for designating an advertisement part for each local area is described below with reference to Fig. 13.

In such a case, the operation proceeds from step S701 to step S706. And, when the selection screen 56 for the advertisement part shown in Fig. 12 is provided to the advertisement client head terminal 2 by the advertisement production management server 5 (S801), the advertisement client head terminal 2 selects a plurality of advertisement parts and a plurality of advertisement design information components available at the local bases, selectively, and transmits selected information to the advertisement production management server 5 (S802).

The advertisement production management server 5 stores the advertisement part and advertisement design information, which are selected in the advertisement client head server 2, in the advertisement database 44 for registration (S803), and transmits the advertisement component and advertisement design information to respective area base servers 3 to instruct the command of the advertisement head server 2 thereto (S804).

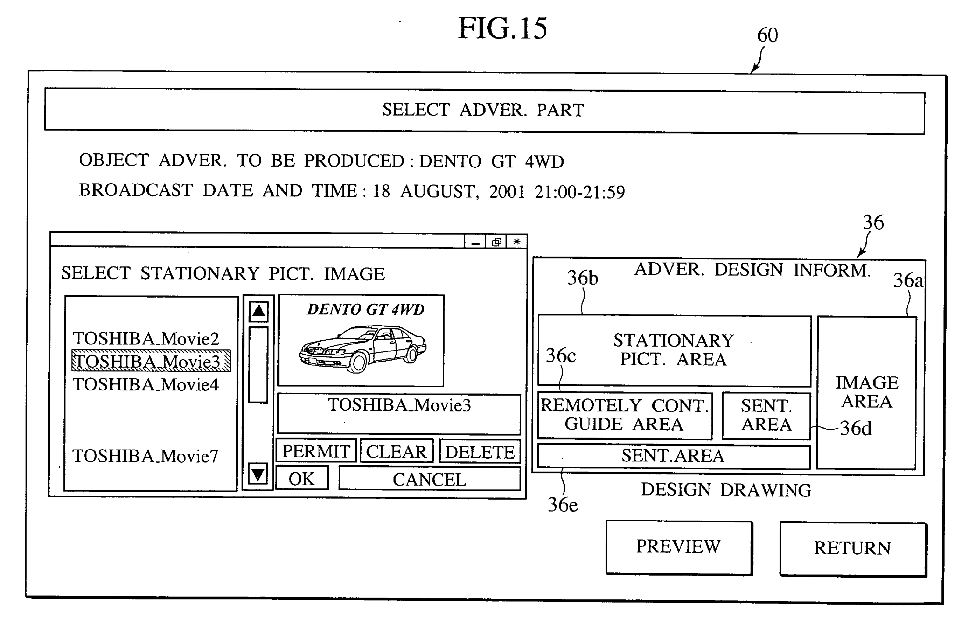

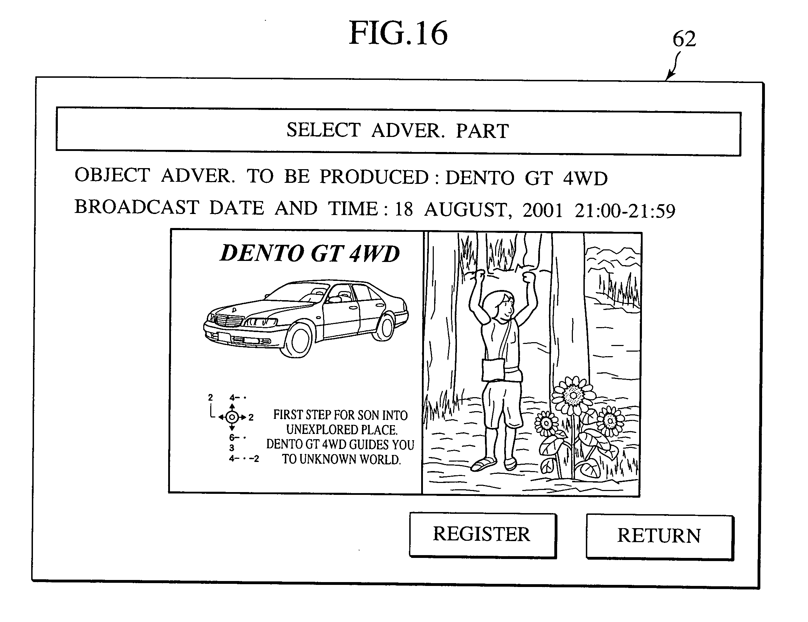

Upon receipt of such instruction, a particular area base server 3 selects the object advertisement to be produced on a selection screen 58 shown in Fig. 14 and, using a selection screen 60 for the advertisement part shown in Fig. 15, further selects desired advertisement parts and advertisement design information components specific for the particular area base server among the advertisement parts and advertisement design information components which are preliminarily selected with the advertisement client head server 2. During such operation, since the pop-up window provides a display of the file, as shown in Fig. 15, selected with the advertisement client head server 2, a desired advertisement part which the particular area base server 3 uses is selected to determine a particular advertisement shown in a selection screen 62 of Fig. 16, with the selected advertisement parts as well as the area base code being transmitted to the advertisement production management server 5 as the advertisement production command information (S805).

The advertisement production management server 5 registers the advertisement production command information, transmitted from the respective area base servers 3, in the advertisement database 44 (S806).

Here, codes of advertisement design information and the advertisement parts which are selected with each area base server are stored in the uniform code database 43. For instance, as shown in Fig. 2D, the advertisement design information selected for the area base K is registered with the code "11", the animation part is registered with the code "13" and the picture image part is registered with the code "001".

Upon registration of advertisement production command information and associated codes, the area base servers 3 transmit the input statuses to the client head server 2 for confirmation (S807), thereby terminating the advertisement production command operation in the case where the advertisement part is designated for each area base.

In such a way, since it is possible to select the advertisement part which is used for each area base, even in the presence of the advertisement common to the same products, it is possible to implement processing such as altering the background for each area base, enabling the advertisement to be produced in a style to meet each area base.

While the processing of Fig. 13 has been described in conjunction with a case where the advertisement is altered for each area base, the advertisement part may be modified based on an attribute such as an age, male or female, a resident district, a taste, an occupation and a life style stored in the terminal.

With such production of the advertisement set forth above, it is possible to reduce the production cost, and evaluation of the resulting product can be known from the following operation.

Here, for instance, let it be assumed that there are area bases at 47 points with each area enabled to alter a portion of the advertisement part to be lastly broadcasted. As previously mentioned in step S803, the advertisement database 44 stores therein the plurality of preliminarily prepared parts. When storing such parts in the advertisement database 44, each advertisement is stored in an advertisement storage section 449 in a separate form for each component unit of 449 (i) (i : 1<= i<= n) as shown in Fig. 1D. The component unit may be arbitrarily settled by the producer, with Fig. 1D illustrating a case in which the component unit is managed for each image cut and composed of ten cuts. The advertisement data server 44 manages a "unit cost" for each component unit. Here, each cut forming the component unit is referred to as the unit cost 1.

Further, the advertisement data server 44 has a variable managing section 448. The variable which the variables managing section 448 manages represents a number of variation in each component unit. In this example, since the component units of 1∼9 are identical in all the area bases, there is a single variation and the variation is expressed as "1", whereas the last ten cuts are different from one another for each area base and, thus, the number of the area base is expressed as 47.

The evaluating section 447 obtains the total cost with a conventional practice in a formula expressed as
Total Cost (Conventional Practice) = Maximum Variable*Component Unit Number*Unit Cost = 47*10*1 = 470. Similarly, the evaluating section obtains the total cost with the presently filed embodiment in a formula expressed as
Total Cost (Present Embodiment) = Component Unit Number*Unit Cost = 10*1 =10. Finally, the evaluating section obtains an outcome index with a deletion rate in a formula of "Conventional Practice" : "Present Embodiment" = 470 : 10 = 47 : 1" from the above calculated results.

### 2-3. Production of the Complete Package and Providing Operation

Now, " Production of the Complete Package and Providing Operation" is described below with reference to a flow chart of Fig. 17.

First, the advertisement production management server 5 extracts advertisement production command information from the advertisement database 44 (S901) and produces a complete package by combining the advertisement part based on such advertisement production command information (S902).

The resulting complete package is added with the CM code and is registered in the advertisement database 44 (S903).

The CM code added in such processing is registered in the uniform code database 43. For instance, the CM code shown in Fig. 2E represents the CM code added to the advertisement of the area base K, the advertisement code "101" indicates the advertisement code of the advertisement A of Fig. 3B, and the advertisement frame code "111" indicates the advertisement frame code of the advertisement frame D of Fig. 3A. Also, the area code "11251" indicates the area code added to the area base K and forms data which is stored in the client database 42.

Next, operation checking is implemented for the complete package (S904). The operation checking enables checking as to whether buttons, such as "Next" or "Return", displayed on the advertisement screen is normally operative, or as to whether, when "Request Materials" is selected on the screen, the terminal is automatically connected to a telecommunication network, allowing the complete package, whose normally operative capability is confirmed, to be automatically transmitted to the broadcast entrepreneur 6 (S905).

Upon receipt of the complete package, the broadcast entrepreneur 6 conducts a final confirmation of the complete package (S906) and transmits the complete package to the viewer (S907).

Here, the broadcast entrepreneur 6 transmits data, related to the exposure such as the broadcasting time and the number of broadcasts of the advertisement, to the advertisement production management server 5 as advertisement broadcasting data (S908), whereupon the advertisement production management server 5 collects the exposures, indicative of how many viewers are provided with the advertisement, and calculates the same (S909). The collection result is then transmitted to the client and the production company 4 (S910).

When this takes place, the exposures of the complete package are collected, while retrieving the advertisement parts and advertisement design information used in the complete package to collect and manage the exposures of the respective advertisement parts and advertisement design information.

On the other hand, the audience looks at and listens to the advertisement, transmitted from the broadcast entrepreneur 6 in step S907, using the audience terminals 7 (S911), whereby when reaction information such as inputs for the request of materials and inputs for questionnaires is input from the screen (S913), the advertisement production management server 5 receives reaction information for collection thereof (S913). When this takes place, in a case where the audience terminal 7 comprises a digital television, the advertisement production management server 5 receives reaction information via the response server 8.

The advertisement production management server 5 analyzes the collected result of reaction information, enabling advertisement production command information to be altered on the basis of altering conditions preliminarily determined by the client (S914).

For instance, it may be determined such that in a case where the advertisement of the same product includes the advertisement A, using the stationary picture part A, and the advertisement B using the stationary picture part B, a priority is given to subsequently use the stationary picture part, which had a large rate of response, when the relevant advertisement received the response (such as applications of the questionnaires) rate in a range beyond 70 percentages. And, in an event that the response rate against the advertisement A exceeds the range of 70 percentages of an entire response, the advertisement production command information is altered so as to use the stationary picture part A in a subsequent advertisement.

On the basis of altered advertisement production command information, production of the complete package is implemented from a subsequent stage (S902), with production and providing operations of the complete package being conducted by repetitively executing the operations set forth above.

Now, a method of using the audience response information utilizing meta information set forth above is described in detail hereinafter.

In the following description, an exemplary case is described in which meta information, composed of audience response information such as "response information number, favorable impression information by generation" or the like, is automatically added to the advertisement part (animation and stationary picture, etc.), which is prepared employing actors: B and C, D as an example, and is used in production of a subsequent advertisement. For instance, let it be assumed that response information from the audience had the following contents:
- advertisement using actor B: response information number of 10,000, favorable impressive information by generation = female, strongest in a generation of 20 years;
- advertisement using actor C: response information number of 20,000, favorable impressive information by generation = female, strongest in a generation of 30 years;
- advertisement using actor D: response information number of 10,000, favorable impressive information by generation = male, largest in a generation of 30 years.

As shown in Fig. 1C, the advertisement database 44 is structured with the audience response information managing section 440 which forms an essential part for utilizing audience response information to produce the advertisement, the feed back section 441, and the meta information adding section 446. As previously mentioned above, the responses from the audience against the advertisement are inputted to the audience response information managing section 440 via the audience terminal 7, the response server 8 and the audience response information receiving section 17.

In the advertisement production management server 5, new meta information is added to each part on the basis of such response information in the following sequence.

The audience response information managing section 440 extracts the "Condition Formula", the "Tag" and the "Value" in terms of the advertisement. For instance, operation is executed to extract the "Condition Formula", such as "Actor A", "Actor B" and "Actor C", the tag of "Response Information Number" and "Favorable Impressive Information", and the value of "10,000 pieces" and "Female, Strongest Response in the Generation of 20 years". Here, the "Condition Formula", the "Tag" and the "Value" derived from the response against one advertisement are treated as a bundle of information.

Subsequently, the feed back section 441 retrieves the advertisement component in which the actors A, B and C are used. In order to execute the retrieving step, the feed back section 441 gives the condition formula of "Actor B", "Actor C" and "Actor D" which have been previously extracted.

In a succeeding step, the retrieval analyzing section 443 divides the condition formula, given by the retrieval request section 442, into the "Tag" and the "Value". Here, the " Tag " represents the "Actor", and the "Value" represents "= B", "= C" and "= D". On the basis of the "Tag", the retrieval analyzing section 443 executes the retrieving in the tag database 445 to read in the "discrimination module" that corresponds to the content of the "Actor".

The retrieval executing section 444 gives the factors of "= B", "= C" and "= D" to the retrieved discrimination module. On the basis of such factors, the discrimination module retrieves the advertisement part from the advertisement part database 44. The discrimination module retrieves the part, that has the tag of "Actor" and the value of "= B", "= C" and "= D" from the advertisement part database 44.

Next, the meta information adding section 446 adds information from the audience response information managing section 440, i.e., meta information, composed of a combination of the "Tag" and the "Value" related to the "Actor= B", to the advertisement part in the advertisement part database 44 retrieved as "Actor is B" in the above retrieving operation. Here, the advertisement part indicative of "Actor is B" is added with meta information indicative of the above audience response information of "Response Information Number = 10,000 pieces" and "Favorable Impressive Information by the Generation = the Strongest in the Generation of 20 years".

Thus, since response information from the audience can be added to the part as meta information, it is easy to produce the advertisement referring to meta information added during production of another advertisement. For instance, when producing the advertisement under a condition indicative of "which actor has popularity in order to produce the advertisement directed to a target of the generation in 20 years ?", it is possible for the producer to effectively obtain the part satisfying the condition from the advertisement parts automatically added with meta information in the sequence previously mentioned. Further, it is possible for the producer to alter the above described advertisement production and command information on the basis of meta information automatically added in such a way.

As set forth above, with the production and providing operations of the complete package previously mentioned, since not only the exposure rate of the complete package but also the exposure rates of the respective advertisement components and advertisement design information can be collected, it is possible to achieve the management of the advertisement in a higher quality.

Further, the presence of a capability of altering advertisement production command information on the basis of the altering conditions preliminarily determined by the client upon collection of response information from the audience enables the advertisement to be produced in a style reflecting the audience response.

## Claims

1. An advertisement production management server (5) comprising:
an advertisement part (31a) which forms an object advertisement (31) to be produced;
a design information receiving section (11) which receives advertisement design information (36) to determine a layout of the advertisement component;
a separate examination preliminary processing section (12) which executes a preliminary processing of an examination for discriminating whether the advertisement part and the advertisement design information form an advertisement which is allowable to be broadcasted;
an examination request section (13) which transmits a processed result, obtained in the separate examination preliminary processing section, and the advertisement part and advertisement design information to a broadcast entrepreneur, who provides an audience with the advertisement, to request the examination thereof, and receives a result of the examination conducted by the broadcast entrepreneur;
an advertisement production command information receiving section (14) which transmits the advertisement part and the advertisement design information, of which the examination processing is conducted with the examination request section by the broadcast entrepreneur, to an advertisement client who has ordered the object advertisement to be produced, and receives an advertisement production command information, for producing a complete package forming a finally completed advertisement, from the advertisement client;
a complete package producing section (15) which produces the complete package of the production object advertisement on the basis of the advertisement production command information; and
a complete package transmitting section (16) which transmits the complete package to the broadcast entrepreneur.

2. The advertisement production management server (5) according to claim 1, further comprising:
an audience response information receiving section (17) which receives response information from the audience who looks at and listens to the complete package provided by the broadcast entrepreneur; and
an advertisement production command information altering section (18) which allows the advertisement production command information of the object advertisement for production on the basis of the response information.

3. The advertisement production management server (5) according to claim 1, further comprising:
a management section (19) which obtains data, related to an exposure result of the complete package, from the broadcast entrepreneur and manages the complete package for each advertisement part and each advertisement design information on the basis of the data.

4. The advertisement production management server (5) according to claim 1, wherein:
the advertisement production command information receiving section (14) transmits the advertisement part and the advertisement design information to a head of the advertisement client to allow the head of the advertisement client to select the advertisement component and the advertisement design information, with selected advertisement part and advertisement design information being transmitted to respective area bases of the advertisement client for permitting the respective area bases to deliver advertisement production command information to be received by the advertisement production command information receiving section.

5. The advertisement production management server (5) according to claim 1, wherein:
the separate examination preliminary processing section (12) retrieves an examination knowledge database (41) which stores information that forms an examination standard and executes the preliminary processing of the examination; and
the examination request section (13) stores the examination result, received from the broadcast entrepreneur, in the examination knowledge database.

6. An automatic advertisement production management system (1) comprising:
a production terminal (4) which provides separate advertisement components composed of a plurality of advertisement parts and a plurality of advertisement design information;
an advertisement client terminal (2) which provides advertisement production command information indicative of the advertisement part selected from the plural advertisement parts and the advertisement design information selected from the plural advertisement design information; and
an advertisement production management server (5) which stores the separate advertisement components to enable the advertisement client terminal to retrieve the selected advertisement part and the selected advertisement design information, the advertisement production management server including a separate examination processing section (12) to execute a separate examination of the selected advertisement part and the selected advertisement design information to discriminate as to whether the separate advertisement components form an advertisement available to be broadcasted, and a complete package producing section (15) responsive to the advertisement production command information and a separate examination processed result for producing a complete package (31) to be evaluated as allowable to be broadcasted.

7. The automatic advertisement production management system (1) according to claim 6, wherein:
the separate examination processing section (12) includes:
a retrieval request section (121) which obtains a retrieval formula for specifying the advertisement part, forming an object to be examined in a preliminary separate examination, from meta information added to the advertisement part;
a retrieval analyzing section (122) which extracts tag information and a value of the tag information, indicative of an attribute of the meta information of the desired advertisement part, from the retrieval formula obtained with the retrieval request section, and retrieves a discrimination module relevant to the tag information from a tag database preliminarily prepared in the automatic advertisement production management system; and
a retrieval executing section (123) which gives the value as a factor to the discrimination module read out by the retrieval analyzing section and retrieves the desired advertisement part.

8. A method of performing production and management of an advertisement using a computer system (1), the method comprising:
compelling a server (5) to receive an advertisement part (31a), which forms an object advertisement (31) to be produced, and advertisement design information (36), that determines a layout of the advertisement part;
compelling the server to execute a preliminary processing of an examination for discriminating whether the advertisement part and the advertisement design information form the advertisement which is allowable to be broadcasted;
compelling the server to transmit the advertisement part and the advertisement design information as well as a preliminarily processed result to a broadcast entrepreneur (6), who provides an audience with the advertisement, to request the examination thereof, and compelling the server to receive a result of the examination conducted by the broadcast entrepreneur;
compelling the server to transmit the advertisement part and the advertisement design information, whose examinations are processed by the broadcast entrepreneur, to an advertisement client (2) who has ordered the object advertisement to be produced, and allowing the server to receive an advertisement production command information, for producing a complete package that forms a finally completed advertisement, from the advertisement client;
compelling the server to produce the complete package of the object advertisement to be produced on the basis of the advertisement production command information; and
compelling the server to transmit the resulting complete package to the broadcast entrepreneur.

9. The method of performing production and management of the advertisement using the computer system (1) according to claim 8, wherein:
the complete package (31) is provided to the audience (7) by the broadcast entrepreneur (6);
the server (5) receives response information from the audience who looks at and listens to the complete package; and
the server alters the advertisement production command information of the object advertisement on the basis of the response information.

10. The method of performing production and management of the advertisement using the computer system (1) according to claim 8, wherein:
the server obtains data, related to an exposure result of the complete package, from the broadcast entrepreneur and allows the complete package to be managed for each advertisement component and each advertisement design information on the basis of the data.

11. The method of performing production and management of the advertisement using the computer system (1) according to claim 8, wherein:
the server (5) transmits the advertisement part (31a) and the advertisement design information (36) to a head of the client (2) to allow the head of the client to transmit the advertisement part and the advertisement design information, selected by the head of the client, to respective area bases from which the advertisement production command information is transmitted which is received by the server.

12. The method of performing production and management of the advertisement using the computer system (1) according to claim 8, wherein:
the server (5) executes the preliminary processing of the examination by retrieving an examination knowledge database (41), which stores information that forms an examination standard, and executing the preliminary processing of the examination; and
when the server receives the examination result transmitted from the broadcast entrepreneur (6), the examination result is stored in the examination knowledge database.

13. A method of automatically producing and managing an advertisement, the method comprising:
providing separate advertisement materials including a plurality of advertisement parts (32,33,34,35) and a plurality of advertisement design information (36a,36b,36c,36d,36e), respectively;
providing advertisement production command information indicative of selected one of the advertisement parts and selected one of the advertisement design information;
storing the separate advertisement materials in an advertisement production management server (5);
retrieving the selected one of the advertisement parts and selected one of the advertisement design information;
processing separate examination of the selected one of the advertisement parts and the selected one of the advertisement design information as to whether these separate advertisement materials are qualified to form an advertisement allowable to be broadcasted; and
producing a complete package (31) of the advertisement, to be evaluated as allowable to be broadcasted, in response to the advertisement production command information and a result of the separate examination processed.
